# EUROPEAN PATENT SPECIFICATION

(11) **EP 3 838 621 B1**
(45) Date of publication and mention of the grant of the patent: **07.06.2023**
(21) Application number: 20214103.2
(22) Date of filing: 15.12.2020
(51) Int. Cl.: B60C 9/20

(54) **PNEUMATIC TIRE**
LUFTREIFEN
PNEUMATIQUE

(30) Priority: 17.12.2019 US 201962949010 P; 14.10.2020 US 202017070209
(43) Date of publication of application: 23.06.2021
(73) Proprietor: The Goodyear Tire & Rubber Company, Akron, OH 44316 (US)
(72) Inventor: PASSANTE SPACCAPIETRA, Ettore, L-9070 Ettelbruck (LU); MULLER, Philippe Joseph Auguste, B-6971 Champlon (BE); WINKIN, Didier, B-6600 Bastogne (BE); COCCON, Marco Nicolo, L-2230 Luxembourg (LU); MANOGARAN, Arun Prasath, L-8715 Everlange (LU); KRIER, Roland Willibrord, L-6622 Wasserbillig (LU); NAWALE, Vaibhav, L-8710 Boevange-sur-Attert (LU)
(74) Representative: Kutsch, Bernd

(56) References cited:
- WO-A1-2011/131383
- WO-A1-2012/123132
- US-A- 4 688 615
- US-A1- 2017 239 995

## Description

### Field of the Invention

The invention relates in general to pneumatic tires, and more particularly for vehicles such as trucks.

### Background of the Invention

The commercial truck market is moving towards an increase in overall vehicle weight, which is due in part to the increase in weight of the motor and equipment. The increase in overall vehicle weight requires a tire capable of handling the additional loading. Thus, a tire with improved crown durability and increased load carrying capacity is desired.

### Summary of the Invention

The invention relates to a tire in accordance with claim 1.

Dependent claims refer to preferred embodiments of the invention.

The invention provides in a first aspect a pneumatic tire for use on trucks, the tire having a tread, sidewalls, and a pair of beads, and a belt reinforcement structure located radially inward of the tread, the belt structure consisting of only three belts, wherein two of the belts are a pair of working belts, wherein the angle of the working belts range from 12 degrees to 35 degrees from the circumferential direction, wherein the working belts are extensible, wherein the third belt is a low angle belt having reinforcements angled at less than 5 degrees located between the working belts.

WO 2011/131383 A1 describes a pneumatic tire in accordance with the preamble of claim 1.

Tires having a belt package comprising only three belts with two crossed working belts and a low angle belt therebetween are also known from WO 2012/123132 A1, US 4,688,615 and US 2017/0239995 A1.

### Definitions

"Aspect Ratio" means the ratio of a tire's section height to its section width.

"Axial" and "axially" mean the lines or directions that are parallel to the axis of rotation of the tire.

"Bead" or "Bead Core" mean generally that part of the tire comprising an annular tensile member, the radially inner beads are associated with holding the tire to the rim being wrapped by ply cords and shaped, with or without other reinforcement elements such as flippers, chippers, apexes or fillers, toe guards and chafers.

"Belt Structure" or "Reinforcing Belts" means at least two annular layers or plies of parallel cords, woven or unwoven, underlying the tread, unanchored to the bead, and preferably having both left and right cord angles in the range from 17° to 27° with respect to the equatorial plane of the tire.

"Breakers" means the same as belt or belt structure or reinforcement belts.

"Circumferential" means lines or directions perpendicular to the axial direction within + or - 5 degrees.

"Cord" means one of the reinforcement strands, including fibers, which are used to reinforce the plies.

"Extensible" means a reinforcement, cable or cord having a relative elongation at break of greater than 0.2% at 10% of the breaking load, when measured from a cord extracted from a cured tire.

"Ply" means a cord-reinforced layer of elastomer-coated, radially deployed or otherwise parallel cords.

"Radial" and "radially" mean directions radially toward or away from the axis of rotation of the tire.

"Tread Arc Width" means the arc length of the tread as measured between the radially outermost lateral edges of the tread.

### Brief Description of the Drawings

The invention will be described by way of example and with reference to the accompanying drawings in which:
Fig. 1 is a cross-sectional view of a first embodiment of a tire of the present invention; and

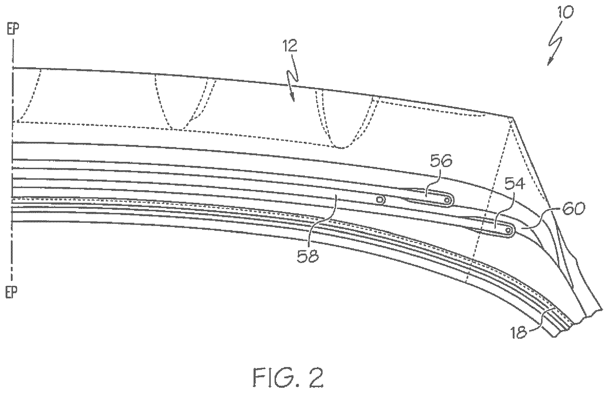

Fig. 2 is a close-up view of the belt package of the tire of FIG. 1.

### Detailed Description of Example Embodiments of the Invention

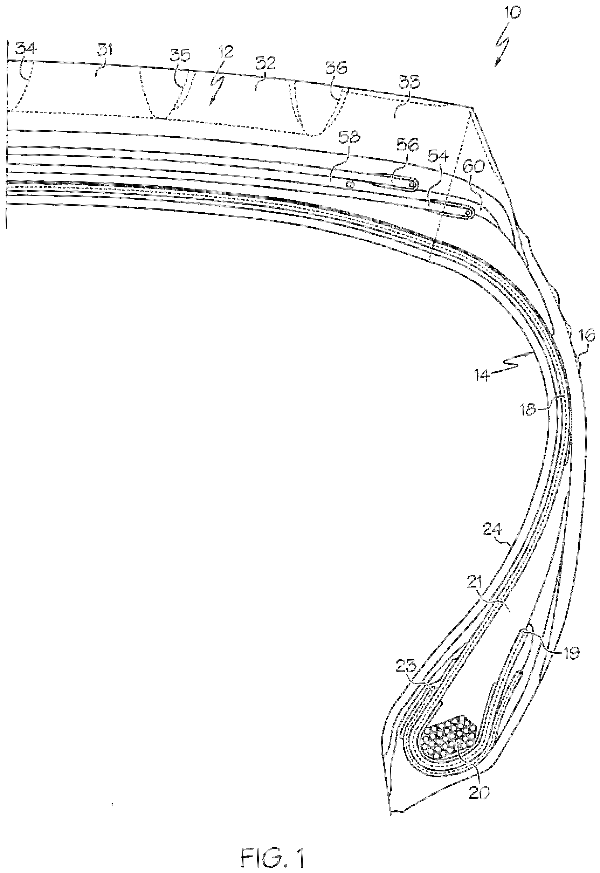

Figure 1 illustrates a first embodiment of a pneumatic tire, suitable for use as a truck tire. The tire 10 has a tread 12 with a non-skid depth D. The tire tread 12 may comprise a plurality of circumferentially continuous ribs, which may vary, but are shown for example as ribs 31, 32 and 33. Positioned between each rib is a preferably circumferential groove 34, 35, 36, which are preferably continuous. The tread may also comprise optional sipes (not shown). The tread pattern is not limited to same, and may comprise, for example, a plurality of blocks and grooves (not shown).

The tire 10 further comprises a casing or carcass 14 which includes two opposed sidewalls 16 which extend down from the tread 12 to the bead area. The casing of the tire may optionally include an inner liner 24 which is typically formed of halobutyl rubber which forms an air impervious barrier. The tire casing 14 further includes one or more radial plies 18 extending from the tread, down the sidewall 16 to the tire bead 20. Preferably, the radial ply 18 is wrapped about or otherwise secured to each annular bead 20.

In a preferred embodiment, there is only one radial ply 18 and it is preferably wrapped around the bead in an inside out manner such that the ply ending 19 is located axially outward and radially outwards of the bead.

The beads 20 may be any desired shape, but in a preferred embodiment, the breads 20 each have a hexagonal configuration with steel filaments.

The tire may further optionally include an apex 21 which may be shaped like a triangle. The ply turnup in the bead area may be optionally reinforced with a chipper 23 wrapped about the bead ply 18.

The tire 10 further includes a belt package 60 which is located between the tread and the one or more plies 18.

The belt package consists of only three belt layers comprising reinforcement. The ply 18 and the belt reinforcing structure 60 are made from cord reinforced elastomeric material, wherein the cords are preferably steel wire or polyamide filaments and the elastomer is preferably rubber.

The belt reinforcing package 60 is limited to only three belts, and includes a pair of extensible working belts, 54, 56. Working belt 54 is located radially inwards of working belt 56.

Belt 54 has an axial width which is equal or about equal to the tread arc width or in a range of from 95 to 105 percent or 98 to 102 percent of the tread arc width. Preferably, belt 54 has a belt width equal or substantially equal to the tread arc width.

The breaker angle of working belt 54 is between +/- 12 and +/- 35 degrees with respect to the circumferential direction of the tire 10, preferably with a right orientation (i. e. between + 12 to + 35 degrees), more preferably in the range of from +/- 19 to +/-25 degrees.

Belt 54 is reinforced with high elongation wire or cord, which is defined as having a % elongation at 10% of the breaking load of greater than 0.4% as measured from a wire or cord taken from a cured tire. The high elongation wire or cord is preferably dipped in RFL. Alternatively, the wire or cord has a % elongation at 10% of breaking load of greater than 1.7% when measurement is performed on a bare wire sample that has not been vulcanized in a tire.

For example, the working belt 54 may be formed of wire having a wire construction of 3x7x, 3x4x or 4x4x. Preferably, the wire has a construction of 3x7x0.22 HE (HE = "high elongation"). The number of ends per 2.54 cm (EPI) in the working belt is preferably in a range of from 8 to 14.

Belt 56 is the second member of the working belt pair. Belt 56 has a width less than the width of belt 54 (the other working belt) and is locate radially outward of belt 54.

Preferably, the belt 56 has an axial width less than the width of belt 54 by a step off, which preferably ranges from 10 to 20 mm on each axial side.

Preferably, the axial width of the second working belt 56 is in a range of from 85 to 98 percent, more preferably 90 to 96 percent, of the axial width of the first working belt 54.

Belt 56 has a breaker angle between +/- 12 and +/- 35 degrees with respect to the circumferential direction of the tire 10, preferably with a left orientation (i. e. between - 12 to - 35 degrees), more preferably in the range of from +/- 19 to +/- 25 degrees. Belt 56 is preferably reinforced with high elongation wire or cord, having the same construction with the same but opposite angular orientation as belt 54. Preferably, also the reinforcement materials and the number of ends per 2.54 cm in the workings belts 54, 56 are the same.

The belt structure 50 further comprises a third belt 58 which is located between the working pair belts, 54, 56. In an alternative approach, the third belt 58 may also be located radially outward of belt 56.

The third belt 58 has reinforcements that are oriented circumferentially at +/- 5 degrees or less with respect to the circumferential direction of the tire 10, preferably 0 degrees or about 0 degrees such as less than +/- 1 degree.

The third belt 58 is preferably formed from spirally winding a rubberized strip of two or more cords. Preferably, the strip has 7 steel cords or from 5 to 9 cords.

Alternatively, the third belt 58 may be formed of a cut belt with the reinforcements oriented in the range of from 0 to 10 degrees from the circumferential direction.

The third belt 58 has a width sized to avoid compression in the shoulder area. The axial belt width of the third belt 58 is preferably in the range of from 70% to 80% of the tread arc width and is even more preferably in the range of from 73% to 77%.

The third belt 58 is wide enough to decrease the strain cycles in the breaker wedge and is just stopped before the shoulder area to avoid a 0 degree wire compression and a too round footprint.

The reinforcement in the third belt 58 is preferably steel cord or aramid. The steel cord preferably has a 4+3x0.35 construction.

The belt structure 60 excludes an overlay belt or a transition belt, or any additional belts, and is limited to only the three belts described above.

The aspect ratio of the tire 10 described above may vary. The aspect ratio is preferably in the range of from 45 to 90.

The tire 10 preferably has a net to gross ratio in the range of from 0.70 to 0.90, more preferably in the ratio of from 0.74 to 0.86 or from 0.78 to 0.84.

## Claims

1. A pneumatic tire having a tread (12), sidewalls (16), a pair of beads (20) and a belt structure (60) located radially inward of the tread (12), the belt structure (60) consisting of only three belts (54, 56, 58), wherein two of said belts (54, 56) are a pair of working belts, namely a first working belt (54) located radially inwards of a second working belt (56), wherein the angle of the reinforcements in the working belts (54, 56) with respect to the circumferential direction of the tire (10) is in a range from +/- 12 degrees to +/- 35 degrees, wherein the working belts (54, 56) are extensible in the sense that they comprise a reinforcement, cable or cord having a relative elongation at break of greater than 0.2% at 10% of the breaking load, when measured from a cord extracted from a cured tire, wherein the third belt (56) is a relatively low angle belt (56) having reinforcements angled at less than +/- 5 degrees with respect to the circumferential direction of the tire (10), and wherein the third belt (56) is located between the working belts (54, 56), **characterized in that** first working belt (54) is reinforced with wire or cord having a % elongation at 10% of the breaking load of greater than 0.4% as measured from a wire or cord taken from a cured tire.

2. The tire of claim 1 wherein the radially inner working belt (54) of said two working belts (54, 56) has an axial width equal or about equal to the tread arc width of the tire (10).

3. The tire of claim 1 or 2 wherein the radially outer working belt (56) of said two working belts (54, 56) has an axial width less than the radially inner working belt (54).

4. The tire of at least one of the previous claims wherein the radially inner working belt (54) is the axially widest belt of the belt reinforcement structure (60).

5. The tire of at least one of the previous claims wherein the relatively low angle belt (58) has an axial width in the range of from 70 to 80 percent of the tread arc width of the tire (10).

6. The tire of at least one of the previous claims wherein the aspect ratio of the tire (10) is less than or equal to 0.6.

7. The tire of at least one of the previous claims wherein the tire (10) is a truck tire.

## Patentansprüche

1. Luftreifen, der eine Lauffläche (12), Seitenwände (16), ein Paar Wülste (20) und eine radial nach innen der Lauffläche (12) angeordnete, aus nur drei Gürteln (54, 56, 58) bestehende Gürtelstruktur (60) hat, wobei zwei der Gürtel (54, 56) ein Paar Arbeitsgürtel sind, nämlich ein erster Arbeitsgürtel (54), der radial nach innen eines zweiten Arbeitsgürtels (56) angeordnet ist, wobei der Winkel der Verstärkungen in den Arbeitsgürteln (54, 56) bezüglich der Umfangsrichtung des Reifens (10) in einem Bereich von +/- 12 Grad bis +/- 35 Grad liegt, wobei die Arbeitsgürtel (54, 56) in dem Sinne dehnbar sind, dass sie eine Verstärkung, ein Kabel oder einen Kord umfassen, die eine relative Bruchdehnung von mehr als 0,2% bei 10% der Bruchlast haben, wenn diese von einem aus einem vulkanisierten Reifen entnommenen Kord gemessen wird, wobei der dritte Gürtel (56) ein relativ niedrig abgewinkelter Gürtel (56) ist, der Verstärkungen hat, die in Bezug auf die Umfangsrichtung des Reifens (10) um weniger als +/- 5 Grad abgewinkelt sind, und wobei der dritte Gürtel (56) sich zwischen den Arbeitsgürteln (54, 56) befindet, **dadurch gekennzeichnet, dass** der erste Arbeitsgürtel (54) mit einem Draht oder Kord verstärkt wird, der eine relative Dehnung, bei 10 % der Bruchlast, von mehr als 0,4 % hat, wenn diese von einem aus einem vulkanisierten Reifen entnommenen Draht oder Kord, gemessen wird.

2. Reifen nach Anspruch 1, wobei der radial innere Arbeitsgürtel (54) der beiden Arbeitsgürtel (54, 56) eine axiale Breite gleich oder etwa gleich der Profilbogenbreite des Reifens (10) hat.

3. Reifen nach Anspruch 1 oder 2, wobei der radial äußere Arbeitsgürtel (56) der beiden Arbeitsgürtel (54, 56) eine axiale Breite kleiner als der radial innere Arbeitsgürtel (54) hat.

4. Reifen nach mindestens einem der vorhergehenden Ansprüche, wobei der radial innere Arbeitsgürtel (54) der axial breiteste Gürtel der Gürtelverstärkungsstruktur (60) ist.

5. Reifen nach mindestens einem der vorhergehenden Ansprüche, wobei der relativ niedrig abgewinkelte Gürtel (58) eine axiale Breite im Bereich von 70 bis 80 Prozent der Profilbogenbreite des Reifens (10) hat.

6. Reifen nach mindestens einem der vorhergehenden Ansprüche, wobei das Aspektverhältnis des Reifens (10) kleiner oder gleich 0,6 ist.

7. Reifen nach mindestens einem der vorhergehenden Ansprüche, wobei der Reifen (10) ein LKW-Reifen ist.

## Revendications

1. Bandage pneumatique qui possède une bande de roulement (12), des flancs 16), une paire de talons (20) et une structure de ceintures (60) disposée dans la direction radiale à l'intérieur de la bande de roulement (12), la structure de ceintures (60) étant constituée uniquement par trois ceintures (54, 56, 58), dans lequel deux desdites ceintures (54, 56) représentent une paire de ceintures de travail, plus précisément une première ceinture de travail (54) qui est disposée dans la direction radiale à l'intérieur d'une deuxième ceinture de travail (56) ; dans lequel l'angle formé par les renforcements dans les ceintures de travail (54, 56) par rapport à la direction circonférentielle du bandage pneumatique (10), se situe dans une plage allant de ± 12 degrés à ± 35 degrés ; dans lequel les ceintures de travail (54, 56) sont extensibles dans le sens où elles comprennent un renforcement, un câble ou un câblé qui possède un allongement relatif à la rupture supérieur à 0,1 %, à 10 % de la charge de rupture, lorsqu'on le mesure à partir d'un câblé qui a été extrait d'un bandage pneumatique vulcanisé; dans lequel la troisième ceinture (56) représente une ceinture (56) du type formant un angle relativement petit qui possède un renforcement formant un angle inférieur à ± 5 par rapport à la direction circonférentielle du bandage pneumatique (10) ; et dans lequel la troisième ceinture (58) est disposée entre les ceintures de travail (54, 56), **caractérisé en ce que** la première ceinture de travail (54) est renforcée avec un fil métallique ou un câblé qui possède un allongement en pour cent, à 10 % de la charge de rupture, qui est supérieur à 0,4 %, lorsque le mesure à partir d'un fil métallique ou d'un câblé qui a été extrait d'un bandage pneumatique vulcanisé.

2. Bandage pneumatique selon la revendication 1, dans lequel la ceinture de travail (54) interne en direction radiale, parmi lesdites deux ceintures de travail (54, 56), possède une largeur axiale qui est égale ou approximativement égale à la largeur d'arc de la bande de roulement du bandage pneumatique (10).

3. Bandage pneumatique selon la revendication 1 ou 2, dans lequel la ceinture de travail (56) externe en direction radiale, parmi lesdites deux ceintures de travail (54, 56), possède une largeur axiale qui est inférieure à celle de la ceinture de travail (54) interne en direction radiale.

4. Bandage pneumatique selon au moins une des revendications précédentes, dans lequel la ceinture de travail (54) interne en direction radiale représente la ceinture de la structure de ceintures de renforcement (60) la plus large en direction axiale.

5. Bandage pneumatique selon au moins une des revendications précédentes, dans lequel la ceinture (58) du type formant un angle relativement petit possède une largeur axiale qui se situe dans la plage de 70 à 80 % de la largeur d'arc de la bande de roulement du bandage pneumatique (10).

6. Bandage pneumatique selon au moins une des revendications précédentes, dans lequel le rapport nominal d'aspect du bandage pneumatique (10) est inférieur ou égal à 0,6.

7. Bandage pneumatique selon au moins une des revendications précédentes, dans lequel le bandage pneumatique (10) est un bandage pneumatique destiné à un camion.
